# EUROPEAN PATENT APPLICATION

(11) **EP 3 923 216 A1**
(43) Date of publication of application: **15.12.2021**
(21) Application number: 21160766.8
(22) Date of filing: 04.03.2021
(51) Int. Cl.: G06Q 10/06

(54) **MULTILEVEL COMBINATORIAL OPTIMIZER FOR RESOURCE PLANNING**

(30) Priority: 10.06.2020 US 202016897688
(71) Applicant: The Boeing Company, Chicago, IL 60606-1596 (US)
(72) Inventor: Svynaryov, Andriy, Chicago, IL 60606-1596 (US); Björk, Magnus, Chicago, IL 60606-1596 (US); Pietrzak, Pawel, Chicago, IL 60606-1596 (US)
(74) Representative: Witte, Weller & Partner Patentanwälte mbB

(57) **Abstract**

The present disclosure provides a multilevel combinatorial optimizer for resource planning that identifies resource use preferences for a set of resources and a set of tasks to be performed; assigns resources to tasks to generate a strict-priority assignment set; in response to reaching a process break: identifies a subset of resources below a specified priority level; assigns the subset to unassigned tasks until each task is fully assigned to provide a full-assignment assignment set; in response to completing assignments for the set of tasks: rectifying inversions in the full-assignment assignment set by: selecting a tuple size for swapping the resources among tasks; identifying tuples of assignments that include an inversion; swapping the assignments identified in the tuples to remove the inversion and update the full-assignment assignment set to a reduced-inversion assignment set; and in response to the reduced-inversion assignment set including no inversions, outputting the reduced-inversion assignment set.

## Description

### BACKGROUND

Aspects of the present disclosure relate to improving computational speed and efficiency in identifying solutions to combinatorial problems.

Combinatorial problems involve finding a grouping, ordering, or assignment of a discrete, finite set of objects that satisfies given conditions. In combinatorial problems, exhaustive search for an optimal solution is generally not tractable.

Resource planning is a type of combinatorial problem for which optimization techniques remains elusive. For example, when presented with a number of tasks and a set of resources to complete those tasks, handling the assignment of resources to tasks can be subject to exponential increases in complexity as the number of tasks and resources increase and/or as the rules or constraints for how to assign those resources to tasks increase. Identifying one or more solutions that "best" assign resources to tasks according to the rules can use significant computing resources and/or significant amounts of time.

### SUMMARY

The present disclosure provides a method in one aspect, the method including: identifying resource use preferences for individual resources of a set of resources and a set of tasks to be performed by the set of resources; assigning the individual resources to individual tasks of the set of tasks in a first order according to priority list and a rule set of assigning individual resources to the set of resources to individual tasks of the set of tasks and based on the resource use preferences to generate a strict-priority assignment set; in response to reaching a process break in assigning the individual resources to the individual tasks in the first order: identifying a subset of resources of the set of resources that are below a specified priority level according to the priority list; assigning the individual resources of the subset of resources to unassigned tasks of the set of tasks according to the rule set until each task of the set of tasks is fully assigned to update the strict-priority assignment set to a full-assignment assignment set with relaxed priority according to the priority list; in response to completing assignments for the set of tasks: rectifying inversions in the full-assignment assignment set by: selecting a tuple size for swapping the individual resources among selected tasks; identifying tuples of resource-to-task assignments of the tuple size that include an inversion that can switch assignment of at least a first resource to a first task and a second resource to a second task to have the first resource assigned to the second task and the second resource assigned to the first task; swapping the resource-to-task assignments identified in the tuples to remove the inversion and update the full-assignment assignment set to a reduced-inversion assignment set; and in response to the reduced-inversion assignment set including no inversions, outputting the reduced-inversion assignment set.

In one aspect, in combination with any example method above or below, identifying and swapping the resource-to-task assignments is exhaustive, such that each combination of resources up to the tuple size is examined when identifying and swapping the resource-to-task assignments.

In one aspect, in combination with any example method above or below, the method further comprises, prior to selecting the tuple size: selecting an initial tuple size for swapping the individual resources among selected tasks; identifying initial tuples of resource-to-task assignments of the initial tuple size that include an initial inversion that can switch assignment of at least a given resource to a given task and a particular resource to a particular task to have the given resource assigned to the particular task and the particular resource assigned to the given task; swapping the resource-to-task assignments to remove the initial inversion and update the full-assignment assignment set to an initially reduced-inversion assignment set; and in response to reaching a break condition and the initially reduced-inversion assignment set including at least one inversion, supplying the initially reduced-inversion assignment set for further reduction when selecting the tuple size.

In one aspect, in combination with any example method above or below, the tuple size is two, thereby identifying two resources to swap with one another, and the initial tuple size is greater than two, thereby identifying a plurality of more than two resources to swap tasks among.

In one aspect, in combination with any example method above or below, assigning the individual resources to the individual tasks in a first order identifies a constrained shortest path assignment for each resource at a given priority level before assigning individual resources of a lower priority level.

In one aspect, in combination with any example method above or below, the process break is one of: an iteration count being reached; a time limit being satisfied; a predefined priority level in the priority list being assigned; and a full assignment set being produced.

In one aspect, in combination with any example method above or below, identifying the subset of resources of the set of resources that are below the specified priority level according to the priority list includes: discarding assignments for the subset of resources to tasks identified in the strict-priority assignment set.

The present disclosure provides a system in one aspect, the system including: a processor; and a memory, including instructions that when executed by the processor provide a multilevel combinatorial optimizer operable to: identify resource use preferences for individual resources of a set of resources and a set of tasks to be performed by the set of resources; assign the individual resources to individual tasks of the set of tasks in a first order according to priority list and a rule set of assigning individual resources to the set of resources to individual tasks of the set of tasks and based on the resource use preferences to generate a strict-priority assignment set;
in response to reaching a process break in assigning the individual resources to the individual tasks in the first order: identify a subset of resources of the set of resources that are below a specified priority level according to the priority list; assign the individual resources of the subset of resources to unassigned tasks of the set of tasks according to the rule set until each task of the set of tasks is fully assigned to update the strict-priority assignment set to a full-assignment assignment set with relaxed priority according to the priority list; in response to completing assignments for the set of tasks, rectify inversions in the full-assignment assignment, wherein the multilevel combinatorial optimizer is further operable to: select a tuple size for swapping the individual resources among selected tasks; identify tuples of resource-to-task assignments of the tuple size that include an inversion that can switch assignment of at least a first resource to a first task and a second resource to a second task to have the first resource assigned to the second task and the second resource assigned to the first task; swap the resource-to-task assignments identified in the tuples to remove the inversion and update the full-assignment assignment set to a reduced-inversion assignment set; and in response to the reduced-inversion assignment set including no inversions, output the reduced-inversion assignment set.

In one aspect, in combination with any example system above or below, identifying and swapping the resource-to-task assignments is exhaustive, such that each combination of resources up to the tuple size is examined when the multilevel combinatorial optimizer identifies and swaps the resource-to-task assignments.

In one aspect, in combination with any example system above or below, the multilevel combinatorial optimizer is further operable to, prior to selecting the tuple size: select an initial tuple size for swapping the individual resources among selected tasks; identify initial tuples of resource-to-task assignments of the initial tuple size that include an initial inversion that can switch assignment of at least a given resource to a given task and a particular resource to a particular task to have the given resource assigned to the particular task and the particular resource assigned to the given task; swap the resource-to-task assignments to remove the initial inversion and update the full-assignment assignment set to an initially reduced-inversion assignment set; and in response to reaching a break condition and the initially reduced-inversion assignment set including at least one inversion, supply the initially reduced-inversion assignment set for further reduction when selecting the tuple size.

In one aspect, in combination with any example system above or below, the tuple size is two, thereby identifying two resources to swap with one another, and the initial tuple size is greater than two, thereby identifying a plurality of more than two resources to swap tasks among.

In one aspect, in combination with any example system above or below, assigning the individual resources to the individual tasks in a first order identifies a constrained shortest path assignment for each resource at a given priority level before assigning individual resources of a lower priority level.

In one aspect, in combination with any example system above or below, the process break is one of: an iteration count being reached; a time limit being satisfied; a predefined priority level in the priority list being assigned; and a full assignment set being produced.

In one aspect, in combination with any example system above or below, wherein to identify the subset of resources of the set of resources that are below the specified priority level according to the priority list the multilevel combinatorial optimizer is further operable to: discard assignments for the subset of resources to tasks identified in the strict-priority assignment set.

The present disclosure provides a memory in one aspect, the memory including instructions, that when executed by a processor enable performance of an operation comprising: identifying resource use preferences for individual resources of a set of resources and a set of tasks to be performed by the set of resources; assigning the individual resources to individual tasks of the set of tasks in a first order according to priority list and a rule set of assigning individual resources to the set of resources to individual tasks of the set of tasks and based on the resource use preferences to generate a strict-priority assignment set; in response to reaching a process break in assigning the individual resources to the individual tasks in the first order: identifying a subset of resources of the set of resources that are below a specified priority level according to the priority list; assigning the individual resources of the subset of resources to unassigned tasks of the set of tasks according to the rule set until each task of the set of tasks is fully assigned to update the strict-priority assignment set to a full-assignment assignment set with relaxed priority according to the priority list; in response to completing assignments for the set of tasks: rectifying inversions in the full-assignment assignment set by: selecting a tuple size for swapping the individual resources among selected tasks; identifying tuples of resource-to-task assignments of the tuple size that include an inversion that can switch assignment of at least a first resource to a first task and a second resource to a second task to have the first resource assigned to the second task and the second resource assigned to the first task; swapping the resource-to-task assignments identified in the tuples to remove the inversion and update the full-assignment assignment set to a reduced-inversion assignment set; and in response to the reduced-inversion assignment set including no inversions, outputting the reduced-inversion assignment set.

In one aspect, in combination with any example memory above or below, identifying and swapping the resource-to-task assignments is exhaustive, such that each combination of resources up to the tuple size is examined when identifying and swapping the resource-to-task assignments.

In one aspect, in combination with any example memory above or below, the operation further comprises, prior to selecting the tuple size: selecting an initial tuple size for swapping the individual resources among selected tasks; identifying initial tuples of resource-to-task assignments of the initial tuple size that include an initial inversion that can switch assignment of at least a given resource to a given task and a particular resource to a particular task to have the given resource assigned to the particular task and the particular resource assigned to the given task; swapping the resource-to-task assignments to remove the initial inversion and update the full-assignment assignment set to an initially reduced-inversion assignment set; and in response to reaching a break condition and the initially reduced-inversion assignment set including at least one inversion, supplying the initially reduced-inversion assignment set for further reduction when selecting the tuple size.

In one aspect, in combination with any example memory above or below, the tuple size is two, thereby identifying two resources to swap with one another, and the initial tuple size is greater than two, thereby identifying a plurality of more than two resources to swap tasks among.

In one aspect, in combination with any example memory above or below, assigning the individual resources to the individual tasks in a first order identifies a constrained shortest path assignment for each resource at a given priority level before assigning individual resources of a lower priority level.

In one aspect, in combination with any example memory above or below, identifying the subset of resources of the set of resources that are below the specified priority level according to the priority list includes: discarding assignments for the subset of resources to tasks identified in the strict-priority assignment set.

### BRIEF DESCRIPTION OF THE DRAWINGS

So that the manner in which the above recited features can be understood in detail, a more particular description, briefly summarized above, may be had by reference to example aspects, some of which are illustrated in the appended drawings.
Figure 1 illustrates an assignment scenario, according to aspects of the present disclosure.
Figure 2 is a flowchart of a method generate an assignment set, according to aspects of the present disclosure.
Figures 3A-3D illustrate examples of assignment swapping to rectify an inversion, according to aspects of the present disclosure.
Figure 4 is a flowchart of a method to rectify inversions in an assignment set, according to aspects of the present disclosure.
Figure 5 illustrates a computing device, according to aspects of the present disclosure.

### DETAILED DESCRIPTION

The present disclosure provides a multilevel combinatorial optimizer that is able to analyze a rule set for how to assign various resources to various tasks to identify one or more resource assignments that best fit the rule set and ensure that all tasks have sufficient resources assigned thereto. Beneficially, the described multilevel combinatorial optimizer is able to arrive at the best assignments faster and more reliably and using less computing resources than prior optimization techniques.

Although the examples given in the present disclosure generally relate to the assignment of pilots (as the resource) to flights (as the tasks) according to seniority rules, training/certification, flight routes, etc. (as the rule set), the present disclosure can be applied in various fields.

In a first example, the multilevel combinatorial optimizer can assign cores of a computer processor (as the resource) to handle a processing load (as the tasks) based on a thread priority from a set of programs (as the rule set). In a second example, the multilevel combinatorial optimizer can assign diversion channels (as the resource) to handle floodwater overflow (as the task) at various portions of a river based on soil saturation levels, development profiles, and road/bridge presence (as the rule set). In a third example, the multilevel combinatorial optimizer can assign various trains, ships, or trucks (as the resource) to handle cargo containers for delivery (as the task), according to shipping routes, delivery schedules, and temperature requirements (as the rule set). As will be appreciated, the described combinatorial optimizer can be applied in a variety of technical fields that are contemplated by the present disclosure.

As used herein, an inversion refers to a subversion of a rule set (e.g., a violation of one or more rules thereof) to (potentially) ensure a better overall assignment of resources to tasks. Inversions are generally to be avoided, as they are rule violations, but may be necessary for the complete allocation of resources to tasks.

For example, a first pilot may have seniority over a second pilot, and should (according to a seniority-based priority list) be given preferred flights before the second pilot is. However, in the event that the first pilot is assigned a first (non-preferred) flight and the second pilot is assigned a second flight that the first pilot would have preferred, an inversion has occurred. The second pilot in this inversion scenario may or may not prefer the second flight over the first flight (or another flight), and according to the rule set the second pilot's preferences are immaterial until the first pilot's preferences are satisfied. The multilevel combinatorial optimizer described herein may include inversions in the proposed assignment to reduce inversions for higher-level rules (e.g., a third pilot with priority over the first pilot), to reduce a number of inversions at the same rule level (e.g., for a fourth and fifth pilot with the same seniority as the first pilot), and/or to ensure that as many tasks as possible are assigned sufficient resources (e.g., the first flight or a third flight would go unstaffed if the first pilot were not assigned to the first flight).

The described multilevel combinatorial optimizer can therefore be understood to operate in three phases: a strict priority phase in which no inversions are allowed, a full assignment phase in which inversions are allowed in order to satisfy the resource demands of the tasks, and an optimization phase that seeks to repair any inversions introduced in the full assignment phase. Thereby, as may be particularly important when handling large datasets prone to combinatorial explosion, the combinatorial optimizer operates initially in a time/operation bounded mode to reduce the complexity of the assignment problem before beginning an exhaustive analysis that respects all of the constraints imposed by the priority list and/or rule set. Accordingly, the multilevel combinatorial optimizer is able to reach an inversion-free solution faster and by using fewer computing resources than previous optimizers.

### Example Assignment Scenario

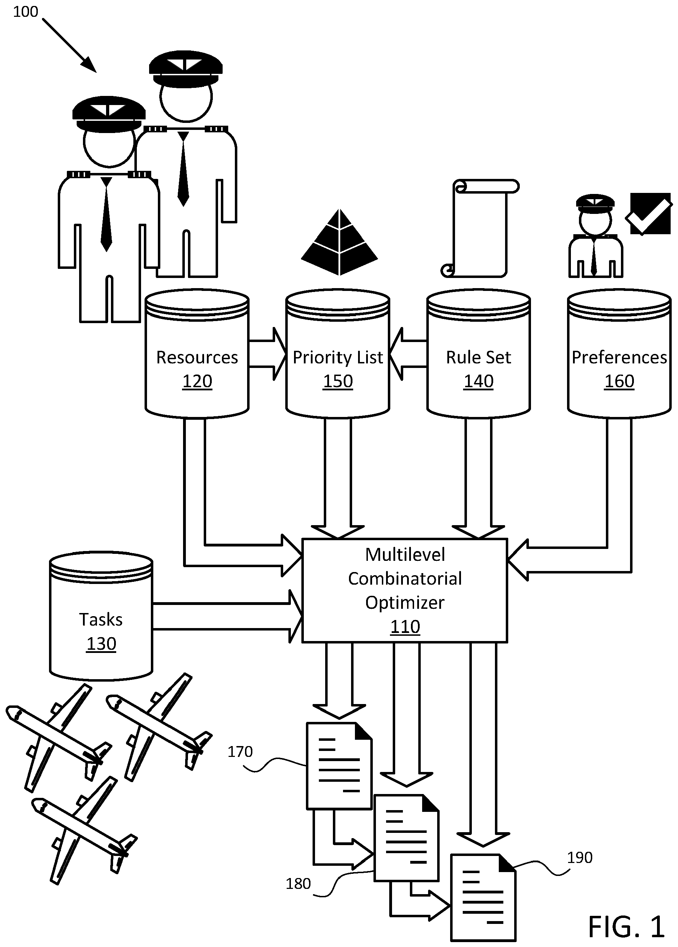

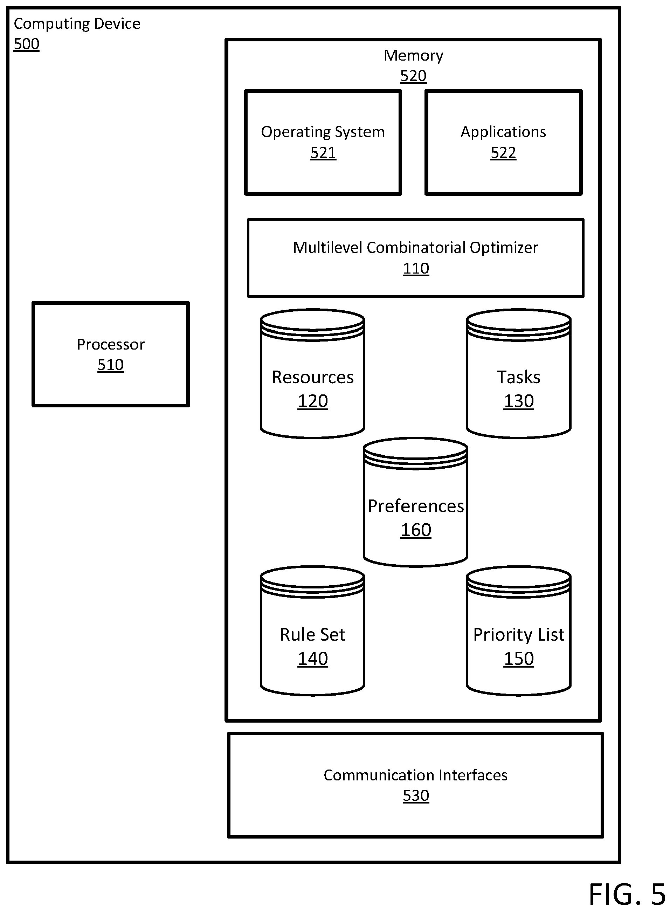

Turning now to Figure 1, an example assignment scenario 100 is illustrated, according to aspects of the present disclosure. A multilevel combinatorial optimizer 110 (also referred to as an MCO 110) can be provided to optimize combinatorial assignment problems in a variety of scenarios including, but not limited to, the example assignment scenario 100 in which pilots are being assigned as the resource 120 to various flights as the task 130. The MCO 110 can be provided by one or more computing devices (such as those discussed in greater detail in regard to Figure 5) to provide a recommendation to an end user in how various resources 120 are to be assigned to a set of identified tasks 130.

When assigning pilots to flights, the MCO 110 considers a rule set 140 that includes features such as whether a given pilot is certified to fly a given aircraft and whether the pilot is available to fly a given aircraft (e.g., vacation time, daily flight time limits, physical locations aircraft and pilot, etc.), but other rule sets 140 are considered in other scenarios. The MCO 110 also considers a priority list 150 for how to assign pilots to flights in the example assignment scenario 100, which can be based on the rule set 140 and features of the resources 120, such as a seniority list, a bid system, a least-used-first-selected schema, other prioritization schemas, and combinations thereof. In other scenarios, the MCO 110 can consider other priority lists 150 for how to prioritize the assignment of resources 120 to tasks 130.

When assigning resources 120 to tasks 130, the MCO 110 also considers use preferences 160 for the resources 120. In the example assignment scenario 100 with pilots and flights, the use preferences 160 can indicate that a given pilot prefers flights that are shorter than or longer than a given time, flights using a given aircraft type, flights to a given destination, flight rosters that begin after a given time or end before a given time, flight rosters that return the pilot to a specified airport at the end of the day, etc. Unlike the rule set 140, the MCO 110 can assigns a resource 120 to a given task 130 that does not confirm with the use preferences 160. For example, a given pilot can specify a use preference 160 to avoid the airport in City *X*, but because flights to or from City *X* are still allowed by the rule set 140, the given pilot can still be assigned flights out of City *X*.

The MCO 110 seeks to satisfy as many use preferences 160 as is possible when recommending assignments between resources 120 and tasks 130, but in some case, satisfying every use preference 160 is not possible if every task 130 is to have sufficient resources 120 assigned. Therefore, the MCO 110 seeks to minimize the impact of having to create assignments that do not respect the use preferences 160, by creating assignments according to the priority list 150 so that higher priority resources 120 are assigned to tasks 130 based on the preferences 160 before lower priority resources 120 are assigned to tasks based on respective preferences for the lower priority resources 120. For example, a most senior pilot may be given flights according to that pilot's preferences before any of the more junior pilots are assigned any flights to ensure that the most-senior pilot's preferences are respected by the MCO 110. When following the priority list 150, the MCO 110 generates a strict-priority assignment set 170, which contains no inversions, but may include tasks 130 that do not have resources 120 assigned thereto.

The MCO 110 can then refine the strict-priority assignment set 170 to complete the assignment of resources 120 to tasks 130 and thereby produce a full-assignment assignment set 180. The full-assignment assignment set 180 is based off of the strict-priority assignment set 170, but ensures that each task 130 is assigned the resources 120 required, albeit potentially at the expense of the preferences 160 of higher priority resources 120 over lower priority resources 120. For example, to ensure that a given flight to City A is assigned a pilot, the MCO 110 can assign a high seniority pilot to the flight to City A instead of a flight to City B, even though the pilot has an indicated a preference for flights to City B over City A. If another pilot, of lower seniority than the first pilot, is assigned the flight to City B and could have been assigned the flight to City A instead the higher priority pilot, an inversion of the normal priority list has occurred.

To rectify the inclusion of inversions in the assignments, the MCO 110 further refines the full-assignment assignment set 180 into a reduced-inversion assignment set 190. The MCO 110 may produce several iterations of the reduced-inversion assignment set 190 (e.g., an initial reduced-inversion assignment set 190, a subsequent reduced-inversion assignment set 190) until a final reduced-inversion assignment set 190 is produced that includes no inversions. To produce a reduced-inversion assignment set 190, the MCO 110 looks for inversion and groups of resources 120 that can swap assignments to various tasks and thereby remove the inversion.

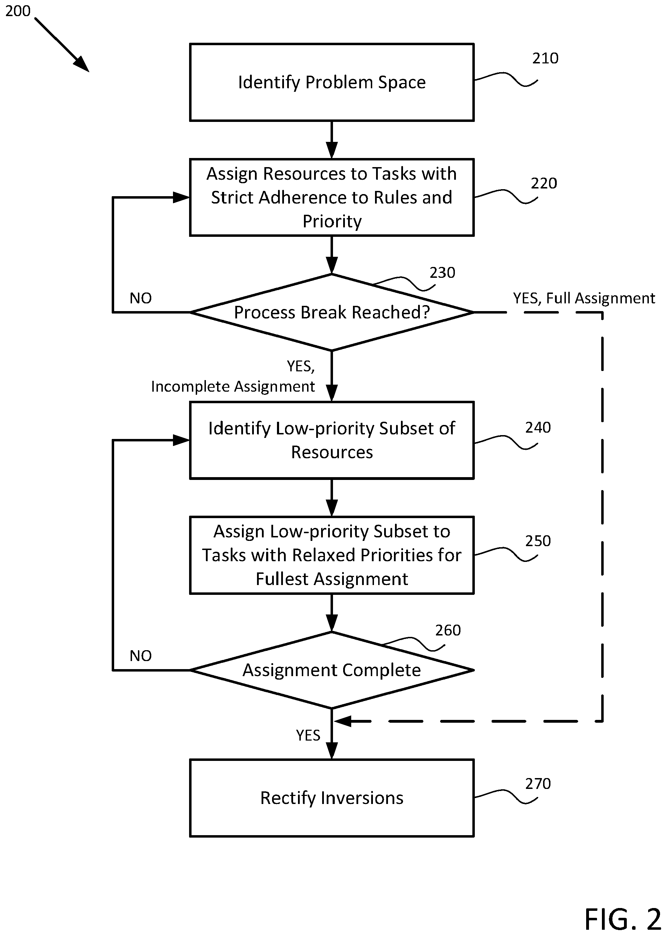

Figure 2 is a flowchart of a method 200 generate an assignment set, according to aspects of the present disclosure.

Method 200 begins at block 210, where a problem space is identified to the MCO, which can include identifying resource use preferences for individual resources of a set of resources and a set of tasks to be performed by the set of resources.

For example, a set of pilots who are available for duty on a given day can be identified as the resources and the MCO then looks up the flight-choice preferences of those pilots as the use preferences. The tasks in the present example to be performed by the pilots include the various flights that need to be crewed for the given day, which can indicate the aircraft type assigned for the flight, route information (e.g., origin and destination), length of flight, predicted gate assignments, and the like.

The MCO also identifies a rule set for which assignments of resources to tasks are valid, and a priority list for how to prioritize one resource assignment over another (e.g., a seniority list for the pilots). Continuing the example of assigning pilots to flights, the rule set can include airframe qualifications (e.g., whether a pilot is certified to fly a given aircraft), maximum work times for the pilots, locational rules (whether a pilot can be assigned to a flight at a different location that the pilot is currently located at), international travel authorizations, or the like.

At block 220, the MCO assigns the resources to the tasks with strict adherence to the priority list and the rule set when applying the use preferences to generate a strict-priority assignment set that identifies which resources are assigned to which tasks. For example, an MCO assigning pilots to flights would create valid flight assignments (i.e., according to the rule set) in a first order according to a seniority list (as a priority list) so that the most senior pilots are assigned preferred flights before less senior pilots. The MCO attempts to find the best sets of assignments for assigning the resource to the tasks and can attempt several potential assignments so long as the rule set is adhered to and the priority list is adhered to. In various aspects, the MCO determines which potential assignments qualify as the "best" assignments by calculating a constrained shortest path assignment that assigns each resource at a given priority level before assigning individual resources of a lower priority level.

At block 230, the MCO determines whether a process break for assigning resources to tasks with strict adherence to the rule set and priority list has been reached. When a process break has not been reached, method 200 returns to block 220 to continue assigning resources to tasks with strict adherence to the rule set and priority list.

When a process break has been reached, method 200 proceeds to block 240 or block 270, depending on the type of process break reached. In various aspects, the process break can include an iteration count being reached (e.g., performing block 220 X times), a time limit being satisfied (e.g., performing iterations of block 220 for at least Y minutes), a predefined priority level in the priority list being assigned (e.g., once priority level Z of the resources has been assigned to tasks with strict adherence to the rule set and priority list), in which case method 200 proceeds to block 240. A process break can also be reached when the MCO generates a strict-priority assignment set (according to block 220) that fully assigns resources to tasks, in which case method 200 proceeds to block 270.

At block 240, the MCO identifies a low-priority subset of resource from the full set of resources that are below a specified priority level according to the priority list. For example, the low-priority subset of resources can include all pilots with less than X years of seniority (and exclude pilots with more than X years of seniority), regardless of whether those pilots have previously been assigned to a resource in the strict-priority assignment set (or an earlier iteration of the full-assignment assignment set). In various aspects, the MCO discards any assignments of resources-to-tasks for the low-priority subset of resources to allow for those resources and tasks to be made available for a less priority-strict assignment of resources to tasks.

At block 250, the MCO assigns the individual resources of the subset of low-priority resources to unassigned tasks of the set of tasks (i.e., those tasks that do not have resources currently assigned thereto) according to the rule set until each task of the set of tasks is fully assigned. The MCO tracks these assignments in a full-assignment assignment set, which can is based on an updated strict-priority assignment set or an earlier iteration of a full-assignment assignment set.

The MCO relaxes adherence to the priority list when creating or updating the full-assignment assignment set. In various aspects, the MCO can ignore all of the preferences when creating or updating the full-assignment assignment set, or can ignore a subset of the preferences.

For example, the MCO can initially attempt to create the full-assignment assignment set by ignoring one type of preference and respecting the other types of preferences, such as ignoring a pilot's aircraft-type preference and respecting preferences for flight length, destinations, etc. However, depending on which preferences are relaxed/ignored, the MCO can introduce various inversions into the resource assignments that would not be present if the preferences were strictly enforced, such as assigning resources to tasks that violate the relaxed/ignored preferences when other tasks that satisfy through preferences are still available.

At block 260, the MCO determines whether assignment of resources to tasks is completed. If the MCO has not completed assignment of resources to tasks, method 200 returns to block 240, where a low-priority subset of resources is identified.

In various embodiments, each time method 200 returns to block 240, the size of the low-priority subset grows, and the next Y higher priority levels of resources are included in the subset. By growing the size of the low-priority subset for each successive iteration, the MCO is given a larger pool of resources to operate with to identify resources to fully assign to the tasks. However, by having more variables to contend with, the MCO is presented a more difficult resource optimization problem. Therefore, the MCO seeks to optimize the time and computing resources needed to produce a full-assignment assignment set by initially attempting for full assignment with a smaller pool of resource available for assignment to tasks, and grow the pool when the resources included in the smaller pool are insufficient or incapable of producing a full-assignment assignment set.

For example, the MCO may initially attempt to fully assign pilots to flights by ignoring the preferences of the pilots with less than two years of seniority, but if a full-assignment assignment set cannot be generated by ignoring the preferences of that subset of pilots, the MCO may then ignore the preferences of pilots with less than three, four, etc., years of seniority until a full-assignment assignment set is completed. Additionally or alternatively, the MCO can relax or ignore more preferences for how to assign resources to tasks in each iteration of block 250. When the assignment of resources to tasks is complete, method 200 proceeds to block 270.

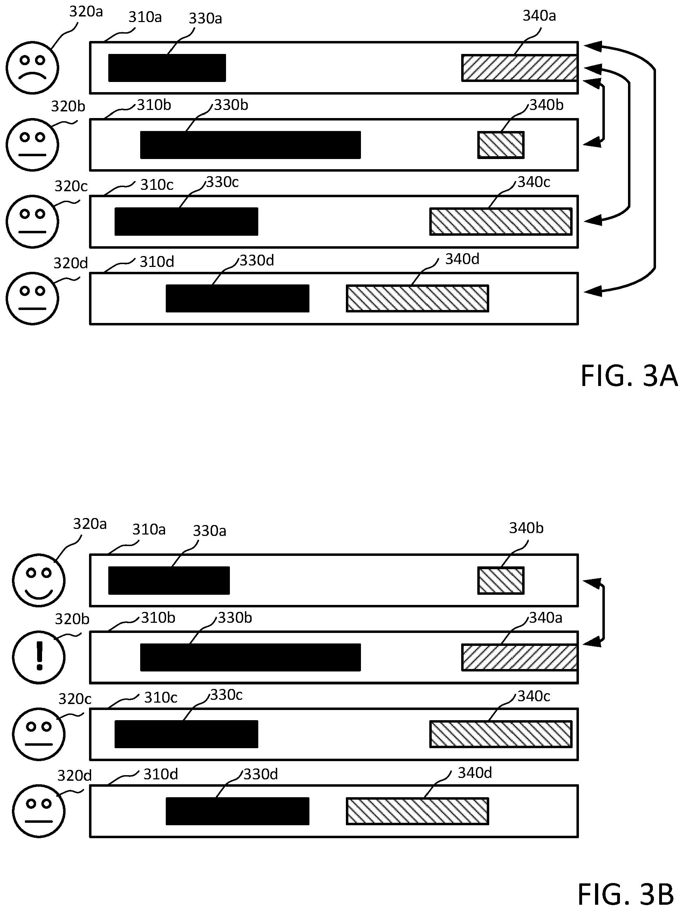

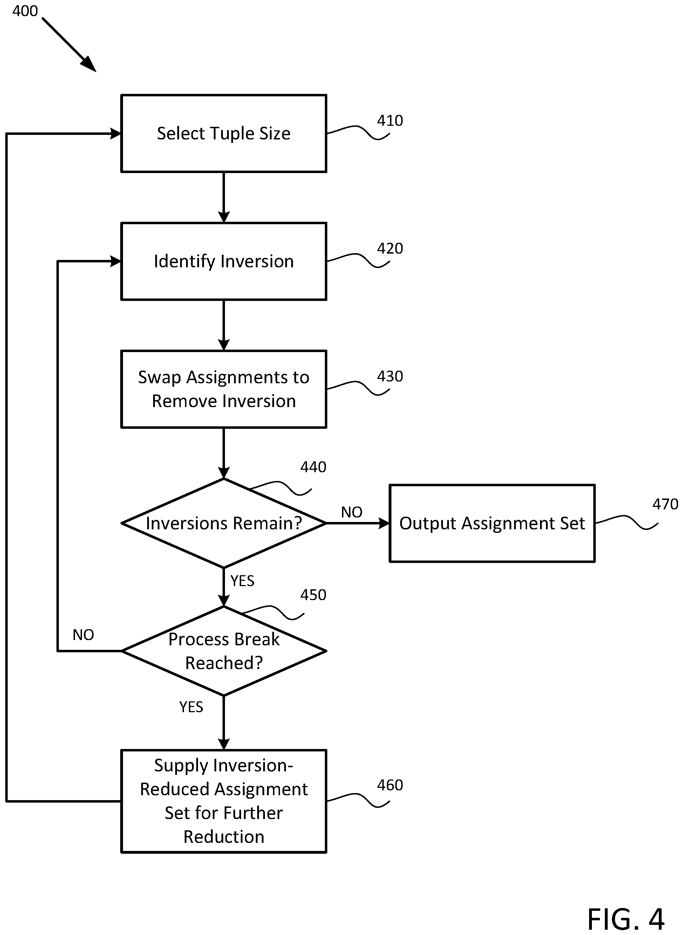

At block 270, the MCO rectifies inversions in the full-assignment assignment set to produce a reduced-inversion assignment set by exhaustively swapping assignments of resources to tasks. Figures 3A-3D illustrate examples of assignment swapping to rectify an inversion, and Figure 4 discusses how the MCO rectifies the inversions in greater detail.

### Examples of Assignment Swapping To Rectify an Inversion

Figure 3A illustrates an example first assignment 300a in which a first resource has been assigned to at least one task in contravention of the preferences for assigning the first resource to tasks. Each of Figures 3B-3D illustrate example assignments that swap the resource-to-tasks assignment that violated the preferences of the first resource, which potentially rectifies the inversion.

In each of Figures 3A-3D, each of the resources is illustrated with an availability 310a-d during which that resource can be assigned to various tasks 330a-d and 340a-d. The MCO can assign a given resource to several tasks 330/340 according to the availability 310 of the resource and various assignment rules. For example, within a pilot's availability for flying aircraft during a given day, the pilot can be assigned to one or more flights, which can consume various amounts of the pilot's availability to complete. The pilot, however, cannot be assigned to two flights at the same time, more than X hours of flights per day, flights on aircraft for which the pilot is not certified, etc.

In various aspects, the MCO seeks to rectify inversions by looking for assignments to swap within the same window as the assignment causing the inversion. For example, although the tasks 330a-d in the first time window can affect the validity of a total assignment set (e.g., cause overlaps with resource-to-task assignments with tasks 340 in the second time window or other rule violations), the MCO can streamline the analysis and swapping process by initially focusing on swapping resource-to-task assignments within a defined time window with other resource-to-task assignments within the same defined time window and ignoring, for purposes of swapping, tasks outside of the defined time window. The MCO can initially set a narrow time window and expand the time window to encompass a greater portion of the availabilities 310 when initial efforts to rectify the inversions do not result in an inversion-free assignment set.

To further aid in understanding, each of the availabilities 310a-d is also shown with a corresponding indicator 320a-d that identifies a status of whether the preferences for the corresponding resource and/or the rules are satisfied. For the purpose of the examples given herein, four resources are presented in Figures 3A-3D, with the first resource initially subject to an inversion in Figure 3A due to the first task 340a in the second time window, as indicated by the first status indicator 320a. The other resources are shown without inversions in Figure 3A, but may include inversions in other examples. For instance, when the MCO seeks to rectify the inversion of assigning the first resource to the first task 340a, the MCO can attempt to swap the first task 340a an *n*^{th} task originally assigned to an *n*^{th} task regardless of whether the *n*^{th}-to-*n*^{th} resource-to-task assignment is subject to an inversion itself, or the relative priority of the first resource to the *n*^{th} resource. For example, the MCO can investigate resource-to-task assignments for a resource of a second-highest priority subject to an inversion with the tasks assigned to a resource of the highest priority and the tasks assigned to resources of third-highest (or lower) priorities.

Figure 3B illustrates a potential swap of the first task 340a (to which the first resource is initially assigned in Figure 3A) and the second task 340b (to which the second resource is initially assigned in Figure 3A). The first status indicator 320a indicates that the swap removes the inversion for the first resource, but the second status indicator 320b indicates that the swap produces an invalid second availability 310b for the second resource (e.g., violating one or more rules, such as total assignment time for the second resource). The MCO can use the swap of the first and second tasks 340a, 340b as part of a multi-step swap (e.g., including more than two resource-to-tasks reassignments) by then proceeding to swap the first task 340a from the second availability 310b with a task found in another availability. However, when the MCO uses a swap tuple size of a pair (i.e., a two-way swap), the MCO can ignore or discard swaps that produce invalid results. As used herein, a tuple is a set of elements of a defined size (i.e., number of elements), such as, for example a tuple of size two identifies two resources and the tasks that those resources are assigned to (as the elements), whereas a tuple of size three identifies three resources and the tasks that those resources are assigned to (as the elements). Assignments of resources-to-tasks are swapped with the tuple, which reduces the complexity of analysis. For example with a tuple of size two, only one swap is possible (e.g., A:a and B:b → A:b and B:a) whereas with a tuple size of three, five swaps are possible (e.g., A:a, B:b, and C:c → A:a, B:c, C:b ∥ A:b, B:a, C:c ∥ A:c, B:b, C:a ∥ A:b, B:c, C:a ∥ A:c, B:a, C:b), and as the tuple size grows, the number of potential swaps continues to grow. Accordingly, having a larger tuple size gives the MCO greater freedom in identifying a potential swap to resolve an inversion, but requires a corresponding increase in computing resources and time to analyze the potential swaps.

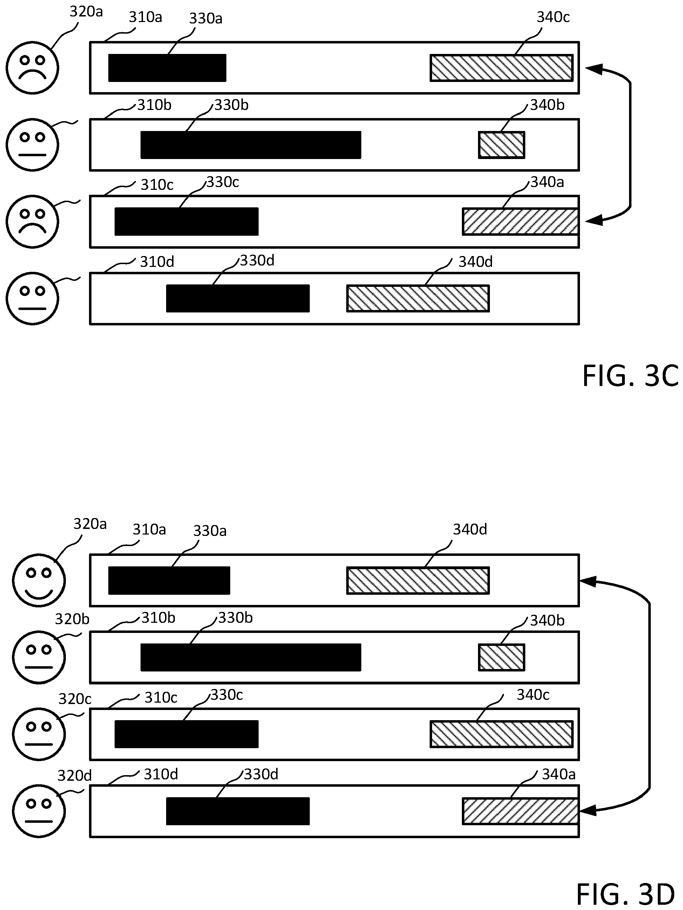

Figure 3C illustrates a potential swap of the first task 340a (to which the first resource is initially assigned in Figure 3A) and the third task 340c (to which the third resource is initially assigned in Figure 3A). The first status indicator 320a indicates that the swap does not remove the inversion for the first resource, and the third status indicator 320c indicates that the swap introduces an inversion for the third resource (e.g., violating one or more assignment preferences for the third resource). The MCO can use the swap of the first and third tasks 340a, 340c as part of a multi-step swap (e.g., including more than two resource-to-tasks reassignments) by then proceeding to swap the first task 340a and third tasks 340c with tasks found in another availability to rectify the inversions. However, when the MCO uses a swap tuple size of a pair (i.e., a two-way swap), the MCO can ignore or discard swaps that produce (or retain) inversions for a higher-priority resource. In various aspects, the MCO can retain swaps that produce (or retain) inversions for lower-priority resources and then perform a subsequent two-way swap analysis for that lower-priority resource. Stated differently, in some aspects, the MCO can (initially) ignore inversions introduced by swaps if the inversion is introduced for a resource of a lower priority than the resource initially identified as experiencing an inversion.

Figure 3D illustrates a potential swap of the first task 340a (to which the first resource is initially assigned in Figure 3A) and the fourth task 340d (to which the fourth resource is initially assigned in Figure 3A). The first status indicator 320a indicates that the swap removes the inversion for the first resource, and the fourth status indicator 320d indicates that the swap produces a valid fourth availability 310d for the fourth resource that respects the preferences of the fourth resource (i.e., the swap does not introduce an inversion in the fourth availability 310d). The MCO can use the swap of the first and fourth tasks 340a, 340d as a valid candidate for further exploration of the assignment set (with no further three-, four-, ..., n-way swaps) as the swap rectifies the inversion for the first resource and introduces no further rule or preference violations.

### Example Method for Rectifying Inversions in an Assignment Set

Figure 4 is a flowchart of a method 400 to rectify inversions in an assignment set, according to aspects of the present disclosure. In various aspects, method 400 may be performed as a part of, or as all of, block 270 from method 200 (discussed in relation to Figure 2) to rectify inversions in a full-assignment assignment set.

At block 410, the MCO selects a tuple size for swapping resource-to-task assignments in the given iteration to swap the individual resources among selected tasks. In various embodiments, the MCO selects a larger tuple size in earlier iterations, and selects smaller tuple sizes, down to a pair (e.g., tuple size = 2) to switch the assignment of at least a first resource to a first task and a second resource to a second task to have the first resource assigned to the second task and the second resource assigned to the first task. In a tuple of size n, where n > 2, the MCO exhaustively examines each potential combination of resources to tasks in the tuple such that each combination of resources up to the tuple size is examined when identifying and swapping the resource-to-task assignments. For example, with a selected tuple size of five, the MCO exhaustively examines the potential swaps for all five/four/three/two resources within the tuple to resolve an inversion in the tuple. By selecting an initially larger tuple size, and a process break for when to switch to a smaller tuple size, the MCO is initially given greater freedom to solve potentially difficult to identify reassignments while bounding the computing resources needed to devote to the analysis of the potential swaps. Although potentially counter-intuitive, by performing the more computationally intensive larger tuple analyses before performing the less computationally intensive smaller tuple analyses, the MCO can remove less tractable assignment problems from the set to analyze with the smaller tuples, and thus perform fewer small-tuple analyses.

At block 420, the MCO identifies an inversion and builds one or more tuples of the selected size. Each of the tuples of resource-to-task assignments includes a resource-to-task assignment inversion so that the MCO can switch the assignment of at least a first resource to a first task and a second resource to a second task to have the first resource assigned to the second task and the second resource assigned to the first task and determine if the inversions remain.

At block 430, the MCO swaps the assignments of resources to tasks in the identified tuples to identify the resource-to-task reassignments that remove the inversion. The MCO then update the full-assignment assignment set (or an earlier iteration of a reduced-inversion assignment set) to create or update a reduced-inversion assignment set.

At block 440, the MCO determines whether additional reversions remain in the reduced-inversion assignment set, or if no further inversions remain in the reduced-inversion set. When no further inversions remain, method 400 proceeds to block 470, otherwise, method 400 proceeds to block 450.

At block 450, the MCO determines whether a process break has been reached in swapping assignments. In various aspects, process breaks include one or more of: an iteration count being reached (e.g., examining X tuples), a time limit being satisfied (e.g., performing swaps for at least Y minutes), a predefined priority level in the priority list being assigned without inversions therein (e.g., once priority level Z of the resources has been assigned to tasks with strict adherence to the rule set and priority list). In response to reaching a process break condition (and the current iteration of the reduced-inversion assignment set including at least one inversion), method 400 proceeds to block 460. If a process break condition has not been reached, method 400 returns to block 420 to identify a further inversion in need of rectification and reiterate through updating the reduced-inversion assignment set until no further inversions remain, or a process break is reached.

At block 460, the MCO supplies the current iteration of the inversion-reduced assignment set for further reduction with an updated tuple size, and method 400 returns to block 410. For example, an initial tuple size that produces an initial reduced-inversion assignment set is larger than a subsequent tuple size that produces a subsequent iterations of the reduced-inversion assignment set.

At block 470, in response to identifying that the assignment set is now free of inversions (i.e., the reduced-inversion assignment set including no inversions), the MCO outputs the inversion-reduced assignment set. In some aspects, the inversion-reduced assignment set can be provided, in whole or in part, to one or more of the resources of controllers for the resources. For example, when the resources are pilots, those pilots are provided with a portion of the inversion-reduced assignment set that indicates the flights that those individual pilots are assigned to. In another example, an airport is provided with a portion of the inversion-reduced assignment set for the flights that are inbound to or outbound from the airport. In a further example, the entire inversion-reduced assignment set is provided to an airline or pilot's organization to verify or approve the assignment set (or for further distribution). Method 400 may then conclude.

### Example Computing Device

Figure 5 illustrates a computing device, according to aspects of the present disclosure. Figure 5 illustrates example computing components of a computing device 500 or other processing system as may be used to provide a multilevel combinatorial optimizer described in the present disclosure.

The computing device 500 includes a processor 510, a memory 520, and an interface 530. The processor 510 and the memory 520 provide computing functionality to run various programs and/or operations for the respective computing device 500, including the storage and retrieval of the various data described herein.

The processor 510, which may be any computer processor capable of performing the functions described herein, executes commands based on inputs received from a user and the data received from the interface 530.

The interface 530 connects the computing device 500 to external devices, such as, for example, external memory devices, external computing devices, a power source, a wireless transmitter, etc., and may include various connection ports (e.g., Universal Serial Bus (USB), Firewire, Ethernet, coaxial jacks) and cabling. The interface 530 is used to send and receive between computing devices 500 and to communicate assignments to end users and to receive inputs therefrom.

The memory 520 is a memory storage device that generally includes various processor-executable instructions, that when executed by the processor 510, perform the various functions related to combinatorial optimization as discussed herein. The processor-executable instructions may generally be described or organized into various "applications" or "modules" in the memory 520, although alternate implementations may have different functions and/or combinations of functions. The memory 520 also generally includes data structures that store information for use by or output by the various applications or modules. In the present disclosure, the memory 520 includes at least instructions for an operating system 521 and one or more application(s) 522. The memory 520 may be one or more memory devices, such as, for example, Random Access Memory (RAM), Read Only Memory (ROM), flash memory, or any other type of volatile or non-volatile storage medium that includes instructions that the processor 510 may execute.

When the computing device 500 provides the functionality of the multilevel combinatorial optimizer 110 (per Figure 1), the memory 520 includes processor executable instructions to provide the functionalities thereof described in the present disclosure. In some aspects, the memory 520 includes databases for locally caching data that include listings or databases that identify the resources 120, tasks 130, rule set 140, priority list 150, preferences 160, etc.

A further understanding of at least some of the aspects of the present disclosure is provided with reference to the following numbered Clauses, in which:
Clause 1: A method, comprising: identifying resource use preferences for individual resources of a set of resources and a set of tasks to be performed by the set of resources; assigning the individual resources to individual tasks of the set of tasks in a first order according to priority list and a rule set of assigning individual resources to the set of resources to individual tasks of the set of tasks and based on the resource use preferences to generate a strict-priority assignment set; in response to reaching a process break in assigning the individual resources to the individual tasks in the first order: identifying a subset of resources of the set of resources that are below a specified priority level according to the priority list; assigning the individual resources of the subset of resources to unassigned tasks of the set of tasks according to the rule set until each task of the set of tasks is fully assigned to update the strict-priority assignment set to a full-assignment assignment set with relaxed priority according to the priority list; in response to completing assignments for the set of tasks: rectifying inversions in the full-assignment assignment set by: selecting a tuple size for swapping the individual resources among selected tasks; identifying tuples of resource-to-task assignments of the tuple size that include an inversion that can switch assignment of at least a first resource to a first task and a second resource to a second task to have the first resource assigned to the second task and the second resource assigned to the first task; swapping the resource-to-task assignments identified in the tuples to remove the inversion and update the full-assignment assignment set to a reduced-inversion assignment set; and in response to the reduced-inversion assignment set including no inversions, outputting the reduced-inversion assignment set.
Clause 2: A method as is described in any of Clauses 1 and 3-7, wherein identifying and swapping the resource-to-task assignments is exhaustive, such that each combination of resources up to the tuple size is examined when identifying and swapping the resource-to-task assignments.
Clause 3: A method as is described in any of Clauses 1, 2, and 4-7, further comprising, prior to selecting the tuple size: selecting an initial tuple size for swapping the individual resources among selected tasks; identifying initial tuples of resource-to-task assignments of the initial tuple size that include an initial inversion that can switch assignment of at least a given resource to a given task and a particular resource to a particular task to have the given resource assigned to the particular task and the particular resource assigned to the given task; swapping the resource-to-task assignments to remove the initial inversion and update the full-assignment assignment set to an initially reduced-inversion assignment set; and in response to reaching a break condition and the initially reduced-inversion assignment set including at least one inversion, supplying the initially reduced-inversion assignment set for further reduction when selecting the tuple size.
Clause 4: A method as is described in any of Clauses 1-3 and 4-7, wherein the tuple size is two, thereby identifying two resources to swap with one another, and the initial tuple size is greater than two, thereby identifying a plurality of more than two resources to swap tasks among.
Clause 5: A method as is described in any of Clauses 1-4, 6, and 7, wherein assigning the individual resources to the individual tasks in a first order identifies a constrained shortest path assignment for each resource at a given priority level before assigning individual resources of a lower priority level.
Clause 6: A method as is described in any of Clauses 1-5, and 7, wherein the process break is one of: an iteration count being reached; a time limit being satisfied; a predefined priority level in the priority list being assigned; and a full assignment set being produced.
Clause 7: A method as is described in any of Clauses 1-6, wherein identifying the subset of resources of the set of resources that are below the specified priority level according to the priority list includes: discarding assignments for the subset of resources to tasks identified in the strict-priority assignment set.
Clause 8: A system, comprising: a processor; and a memory, including instructions that when executed by the processor provide a multilevel combinatorial optimizer operable to: identify resource use preferences for individual resources of a set of resources and a set of tasks to be performed by the set of resources; assign the individual resources to individual tasks of the set of tasks in a first order according to priority list and a rule set of assigning individual resources to the set of resources to individual tasks of the set of tasks and based on the resource use preferences to generate a strict-priority assignment set; in response to reaching a process break in assigning the individual resources to the individual tasks in the first order: identify a subset of resources of the set of resources that are below a specified priority level according to the priority list; assign the individual resources of the subset of resources to unassigned tasks of the set of tasks according to the rule set until each task of the set of tasks is fully assigned to update the strict-priority assignment set to a full-assignment assignment set with relaxed priority according to the priority list; in response to completing assignments for the set of tasks, rectify inversions in the full-assignment assignment, wherein the multilevel combinatorial optimizer is further operable to: select a tuple size for swapping the individual resources among selected tasks; identify tuples of resource-to-task assignments of the tuple size that include an inversion that can switch assignment of at least a first resource to a first task and a second resource to a second task to have the first resource assigned to the second task and the second resource assigned to the first task; swap the resource-to-task assignments identified in the tuples to remove the inversion and update the full-assignment assignment set to a reduced-inversion assignment set; and in response to the reduced-inversion assignment set including no inversions, output the reduced-inversion assignment set.
Clause 9: A system as is described in any of Clauses 8 and 10-14, wherein identifying and swapping the resource-to-task assignments is exhaustive, such that each combination of resources up to the tuple size is examined when the multilevel combinatorial optimizer identifies and swaps the resource-to-task assignments.
Clause 10: A system as is described in any of Clauses 8, 9, and 11-14, wherein the multilevel combinatorial optimizer is further operable to, prior to selecting the tuple size: select an initial tuple size for swapping the individual resources among selected tasks; identify initial tuples of resource-to-task assignments of the initial tuple size that include an initial inversion that can switch assignment of at least a given resource to a given task and a particular resource to a particular task to have the given resource assigned to the particular task and the particular resource assigned to the given task; swap the resource-to-task assignments to remove the initial inversion and update the full-assignment assignment set to an initially reduced-inversion assignment set; and in response to reaching a break condition and the initially reduced-inversion assignment set including at least one inversion, supply the initially reduced-inversion assignment set for further reduction when selecting the tuple size.
Clause 11: A system as is described in any of Clauses 8-10 and 12-14, wherein the tuple size is two, thereby identifying two resources to swap with one another, and the initial tuple size is greater than two, thereby identifying a plurality of more than two resources to swap tasks among.
Clause 12: A system as is described in any of Clauses 8-11, 13, and 14, wherein assigning the individual resources to the individual tasks in a first order identifies a constrained shortest path assignment for each resource at a given priority level before assigning individual resources of a lower priority level.
Clause 13: A system as is described in any of Clauses 8-12 and 14, wherein the process break is one of: an iteration count being reached; a time limit being satisfied; a predefined priority level in the priority list being assigned; and a full assignment set being produced.
Clause 14: A system as is described in any of Clauses 8-13, wherein to identify the subset of resources of the set of resources that are below the specified priority level according to the priority list the multilevel combinatorial optimizer is further operable to: discard assignments for the subset of resources to tasks identified in the strict-priority assignment set.
Clause 15: A memory including instructions, that when executed by a processor enable performance of an operation comprising: identifying resource use preferences for individual resources of a set of resources and a set of tasks to be performed by the set of resources; assigning the individual resources to individual tasks of the set of tasks in a first order according to priority list and a rule set of assigning individual resources to the set of resources to individual tasks of the set of tasks and based on the resource use preferences to generate a strict-priority assignment set; in response to reaching a process break in assigning the individual resources to the individual tasks in the first order: identifying a subset of resources of the set of resources that are below a specified priority level according to the priority list; assigning the individual resources of the subset of resources to unassigned tasks of the set of tasks according to the rule set until each task of the set of tasks is fully assigned to update the strict-priority assignment set to a full-assignment assignment set with relaxed priority according to the priority list; in response to completing assignments for the set of tasks: rectifying inversions in the full-assignment assignment set by: selecting a tuple size for swapping the individual resources among selected tasks; identifying tuples of resource-to-task assignments of the tuple size that include an inversion that can switch assignment of at least a first resource to a first task and a second resource to a second task to have the first resource assigned to the second task and the second resource assigned to the first task; swapping the resource-to-task assignments identified in the tuples to remove the inversion and update the full-assignment assignment set to a reduced-inversion assignment set; and in response to the reduced-inversion assignment set including no inversions, outputting the reduced-inversion assignment set.
Clause 16: A memory as is described in any of Clauses 15 and 17-20, wherein identifying and swapping the resource-to-task assignments is exhaustive, such that each combination of resources up to the tuple size is examined when identifying and swapping the resource-to-task assignments.
Clause 17: A memory as is described in any of Clauses 15, 16, and 18-20, wherein the operation further comprises, prior to selecting the tuple size: selecting an initial tuple size for swapping the individual resources among selected tasks; identifying initial tuples of resource-to-task assignments of the initial tuple size that include an initial inversion that can switch assignment of at least a given resource to a given task and a particular resource to a particular task to have the given resource assigned to the particular task and the particular resource assigned to the given task; swapping the resource-to-task assignments to remove the initial inversion and update the full-assignment assignment set to an initially reduced-inversion assignment set; and in response to reaching a break condition and the initially reduced-inversion assignment set including at least one inversion, supplying the initially reduced-inversion assignment set for further reduction when selecting the tuple size.
Clause 18: A memory as is described in any of Clauses 15-17, 19, and 20, wherein the tuple size is two, thereby identifying two resources to swap with one another, and the initial tuple size is greater than two, thereby identifying a plurality of more than two resources to swap tasks among.
Clause 19: A memory as is described in any of Clauses 15-18 and 20, wherein assigning the individual resources to the individual tasks in a first order identifies a constrained shortest path assignment for each resource at a given priority level before assigning individual resources of a lower priority level.
Clause 20: A memory as is described in any of Clauses 15-19, wherein identifying the subset of resources of the set of resources that are below the specified priority level according to the priority list includes: discarding assignments for the subset of resources to tasks identified in the strict-priority assignment set.

In the current disclosure, reference is made to various aspects. However, it should be understood that the present disclosure is not limited to specific described aspects. Instead, any combination of the following features and elements, whether related to different aspects or not, is contemplated to implement and practice the teachings provided herein. Additionally, when elements of the aspects are described in the form of "at least one of A and B," it will be understood that aspects including element A exclusively, including element B exclusively, and including element A and B are each contemplated. Furthermore, although some aspects may achieve advantages over other possible solutions and/or over the prior art, whether or not a particular advantage is achieved by a given aspect is not limiting of the present disclosure. Thus, the aspects, features, aspects and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, aspects described herein may be embodied as a system, method or computer program product. Accordingly, aspects may take the form of an entirely hardware aspect, an entirely software aspect (including firmware, resident software, micro-code, etc.) or an aspect combining software and hardware aspects that may all generally be referred to herein as a "circuit," "module" or "system." Furthermore, aspects described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to aspects of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various aspects of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

While the foregoing is directed to aspects of the present disclosure, other and further aspects of the disclosure may be devised without departing from the basic scope thereof, and the scope thereof is determined by the claims that follow.

## Claims

1. A method, comprising:
identifying (210) resource use preferences (160) for individual resources of a set of resources (120) and a set of tasks (130) to be performed by the set of resources;
assigning (220) the individual resources to individual tasks of the set of tasks in a first order according to priority list (150) and a rule set (140) of assigning individual resources to the set of resources to individual tasks of the set of tasks and based on the resource use preferences to generate a strict-priority assignment set (170);
in response to reaching (230) a process break in assigning the individual resources to the individual tasks in the first order:
identifying (240) a subset of resources of the set of resources that are below a specified priority level according to the priority list;
assigning (250) the individual resources of the subset of resources to unassigned tasks of the set of tasks according to the rule set until each task of the set of tasks is fully assigned to update the strict-priority assignment set to a full-assignment assignment set (180) with relaxed priority according to the priority list;
in response to completing (260) assignments for the set of tasks:
rectifying (270) inversions in the full-assignment assignment set by:
selecting (410) a tuple size for swapping the individual resources among selected tasks;
identifying (420) tuples of resource-to-task assignments of the tuple size that include an inversion that can switch assignment of at least a first resource to a first task and a second resource to a second task to have the first resource assigned to the second task and the second resource assigned to the first task;
swapping (430) the resource-to-task assignments identified in the tuples to remove the inversion and update the full-assignment assignment set to a reduced-inversion assignment set (190); and
in response to the reduced-inversion assignment set including (440) no inversions, outputting (470) the reduced-inversion assignment set.

2. The method of claim 1, wherein identifying and swapping the resource-to-task assignments is exhaustive, such that each combination of resources up to the tuple size is examined when identifying and swapping the resource-to-task assignments.

3. The method of any of claims 1-2, further comprising, prior to selecting the tuple size:
selecting an initial tuple size for swapping the individual resources among selected tasks;
identifying initial tuples of resource-to-task assignments of the initial tuple size that include an initial inversion that can switch assignment of at least a given resource to a given task and a particular resource to a particular task to have the given resource assigned to the particular task and the particular resource assigned to the given task;
swapping the resource-to-task assignments to remove the initial inversion and update the full-assignment assignment set to an initially reduced-inversion assignment set; and
in response to reaching (450) a break condition and the initially reduced-inversion assignment set including at least one inversion, supplying (460) the initially reduced-inversion assignment set for further reduction when selecting the tuple size.

4. The method of claim 3, wherein the tuple size is two and the initial tuple size is greater than two.

5. The method of any of claims 1-4, wherein assigning the individual resources to the individual tasks in a first order identifies a constrained shortest path assignment for each resource at a given priority level before assigning individual resources of a lower priority level.

6. The method of any of claims 1-5, wherein the process break is one of:
an iteration count being reached;
a time limit being satisfied;
a predefined priority level in the priority list being assigned; and
a full assignment set being produced.

7. The method of any of claims 1-6, wherein identifying the subset of resources of the set of resources that are below the specified priority level according to the priority list includes:
discarding assignments for the subset of resources to tasks identified in the strict-priority assignment set.

8. A system, comprising:
a processor (510); and
a memory (520), including instructions that when executed by the processor provide a multilevel combinatorial optimizer (110) operable to:
identify (210) resource use preferences (160) for individual resources of a set of resources (120) and a set of tasks (130) to be performed by the set of resources;
assign (220) the individual resources to individual tasks of the set of tasks in a first order according to priority list (150) and a rule set (140) of assigning individual resources to the set of resources to individual tasks of the set of tasks and based on the resource use preferences to generate a strict-priority assignment set (170);
in response to reaching (230) a process break in assigning the individual resources to the individual tasks in the first order:
identify (240) a subset of resources of the set of resources that are below a specified priority level according to the priority list;
assign (250) the individual resources of the subset of resources to unassigned tasks of the set of tasks according to the rule set until each task of the set of tasks is fully assigned to update the strict-priority assignment set to a full-assignment assignment set (180) with relaxed priority according to the priority list;
in response to completing (260) assignments for the set of tasks, rectify (270) inversions in the full-assignment assignment, wherein the multilevel combinatorial optimizer is further operable to:
select (410) a tuple size for swapping the individual resources among selected tasks;
identify (420) tuples of resource-to-task assignments of the tuple size that include an inversion that can switch assignment of at least a first resource to a first task and a second resource to a second task to have the first resource assigned to the second task and the second resource assigned to the first task;
swap (430) the resource-to-task assignments identified in the tuples to remove the inversion and update the full-assignment assignment set to a reduced-inversion assignment set (190); and
in response to the reduced-inversion assignment set including (440) no inversions, output (470) the reduced-inversion assignment set.

9. The system of claim 8, wherein identifying and swapping the resource-to-task assignments is exhaustive, such that each combination of resources up to the tuple size is examined when the multilevel combinatorial optimizer identifies and swaps the resource-to-task assignments.

10. The system of any of claims 8-9, wherein the multilevel combinatorial optimizer is further operable to, prior to selecting the tuple size:
select an initial tuple size for swapping the individual resources among selected tasks;
identify initial tuples of resource-to-task assignments of the initial tuple size that include an initial inversion that can switch assignment of at least a given resource to a given task and a particular resource to a particular task to have the given resource assigned to the particular task and the particular resource assigned to the given task;
swap the resource-to-task assignments to remove the initial inversion and update the full-assignment assignment set to an initially reduced-inversion assignment set; and
in response to reaching (450) a break condition and the initially reduced-inversion assignment set including at least one inversion, supply (460) the initially reduced-inversion assignment set for further reduction when selecting the tuple size.

11. The system of claim 10, wherein the tuple size is two and the initial tuple size is greater than two.

12. The system of any of claims 8-11, wherein assigning the individual resources to the individual tasks in a first order identifies a constrained shortest path assignment for each resource at a given priority level before assigning individual resources of a lower priority level.

13. The system of any of claims 8-12, wherein the process break is one of:
an iteration count being reached;
a time limit being satisfied;
a predefined priority level in the priority list being assigned; and
a full assignment set being produced.

14. The system of any of claims 8-13, wherein to identify the subset of resources of the set of resources that are below the specified priority level according to the priority list the multilevel combinatorial optimizer is further operable to:
discard assignments for the subset of resources to tasks identified in the strict-priority assignment set.

15. A memory (520) including instructions, that when executed by a processor (510) enable performance of an operation comprising:
identifying (210) resource use preferences (160) for individual resources of a set of resources (120) and a set of tasks (130) to be performed by the set of resources;
assigning (220) the individual resources to individual tasks of the set of tasks in a first order according to priority list (150) and a rule set (140) of assigning individual resources to the set of resources to individual tasks of the set of tasks and based on the resource use preferences to generate a strict-priority assignment set (170);
in response to reaching (230) a process break in assigning the individual resources to the individual tasks in the first order:
identifying (240) a subset of resources of the set of resources that are below a specified priority level according to the priority list;
assigning (250) the individual resources of the subset of resources to unassigned tasks of the set of tasks according to the rule set until each task of the set of tasks is fully assigned to update the strict-priority assignment set to a full-assignment assignment set (180) with relaxed priority according to the priority list;
in response to completing (260) assignments for the set of tasks:
rectifying (270) inversions in the full-assignment assignment set by:
selecting (410) a tuple size for swapping the individual resources among selected tasks;
identifying (420) tuples of resource-to-task assignments of the tuple size that include an inversion that can switch assignment of at least a first resource to a first task and a second resource to a second task to have the first resource assigned to the second task and the second resource assigned to the first task;
swapping (430) the resource-to-task assignments identified in the tuples to remove the inversion and update the full-assignment assignment set to a reduced-inversion assignment set (190); and
in response to the reduced-inversion assignment set including (440) no inversions, outputting (470) the reduced-inversion assignment set.
